(19) Europäisches Patentamt
European Patent Office
Office européen des brevets

(11) EP 2 134 797 B1

(12) EUROPÄISCHE PATENTSCHRIFT

(45) Veröffentlichungstag und Bekanntmachung des Hinweises auf die Patenterteilung:
**18.06.2014 Patentblatt 2014/25**

(21) Anmeldenummer: **08736048.3**

(22) Anmeldetag: **10.04.2008**

(51) Int Cl.:
***C09D 175/04*** (2006.01) ***C09D 183/04*** (2006.01)
***C09D 187/00*** (2006.01)

(86) Internationale Anmeldenummer:
**PCT/EP2008/054326**

(87) Internationale Veröffentlichungsnummer:
**WO 2008/125585 (23.10.2008 Gazette 2008/43)**

(54) **BIOZIDE/HYDROPHOBE INNENBESCHICHTUNG VON KONDENSATORROHREN (VON INDUSTRIETURBINEN UND NEBENKÜHLKREISEN)**

BIOCIDAL/HYDROPHOBIC INNER COATING OF CONDENSER PIPES (OF INDUSTRIAL TURBINES AND SUBSIDIARY COOLING CYCLES)

REVÊTEMENT INTÉRIEUR BIOCIDE/HYDROPHOBE DE TUBE DE CONDENSATEUR (DE TURBINES INDUSTRIELLES ET DE CIRCUITS DE REFROIDISSEMENT SECONDAIRES)

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.04.2007 DE 102007017518**

(43) Veröffentlichungstag der Anmeldung:
**23.12.2009 Patentblatt 2009/52**

(73) Patentinhaber: **Siemens Aktiengesellschaft
80333 München (DE)**

(72) Erfinder:
- **SÖLLNER, Anke
91088 Bubenreuth (DE)**
- **ZEININGER, Heinrich
90587 Obermichelbach (DE)**

(56) Entgegenhaltungen:
**WO-A-99/26992**
**DE-A1- 10 225 324**
**US-A1- 2003 113 547**
**US-B1- 6 491 981**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine Beschichtung für Behälter und Rohre aus beispielsweise Metall, Glas, Kunststoff oder Keramik, insbesondere Kondensatorrohre, zur Reduzierung oder Vermeidung einer Biofilm-Bildung sowie ein Verfahren zu Herstellung der Beschichtung.

Aufgrund der optimalen Temperaturen für Organismen kann es beispielsweise in Kondensatorrohren von Industrieturbinen und anderen Wärmeüberträgern zur Bildung von Biofilmen, Algenwachstum, so genanntem Biofouling, kommen.

Der Biofilm ist ein permanenter Schutzraum für Mikroorganismen (z. B. Bakterien, Algen, Pilze, Protozoen). Biofilme bilden sich überwiegend in wässrigen Systemen, wenn Mikroorganismen sich an Grenzflächen, beispielsweise auf der Grenzfläche zu einer festen Phase, ansiedeln. Der Biofilm enthält außer den Mikroorganismen hauptsächlich Wasser. Von den Mikroorganismen ausgeschiedene extrazelluläre polymere Substanzen (EPS) bilden in Verbindung mit dem Wasser Hydrogele, so dass eine schleimartige Matrix, die Glykokalyx, entsteht, die dem Biofilm eine stabile Form gibt und die Mikroorganismen ermöglicht, sich an alle Materialien und Gewebe festzuhalten. Die Glykokalyx bestehen aus Biopolymere. Dabei handelt es sich um ein weites Spektrum von Polysacchariden, Proteinen, Lipiden und Nukleinsäuren.

Die Glykokalyx schützt die Bakterien vor Umwelteinflüssen, wie Temperaturänderungen, Flussrate etc. Durch Wasserkanäle der Glykokalyx werden die Bakterien mit Sauerstoff und Nährstoffen versorgt. Durch ihre Sorptionseigenschaften führt sie zu einer Anreicherung von Nährstoffen und ist daher Teil der Überlebensstrategie von Biofilmorganismen in oligotropher Umgebung.

An der Grenzschicht zum Wasser können immer wieder Zellen oder ganze Teile des Biofilms abgegeben und vom vorbeiströmenden Wasser aufgenommen werden. Die Biofilme selbst filtern ankommende neue Zellen und Bakterien und entscheiden, ob das von außen angeschwemmte Teilchen bleiben darf oder vertrieben wird. Bei dieser für die Differenzierung des Biofilms notwendigen interzellulären Kommunikation, auch "Cell-to-Cell-Signaling" genannt, werden entsprechende Botenstoffe bzw. Signalmoleküle ausgesandt.

Oberstes Ziel dieses Informationsaustausches ist die Regulation der Genexpression, die letztendlich den geordneten Aufbau des Biofilmsystems erst ermöglicht. Dieser interzelluläre Informationsaustausch basiert im Wesentlichen auf der kontinuierlichen Abgabe von Botenstoffen durch die Bakterienzellen in niedriger Konzentration. Dieses Prinzip der zelldichteabhängigen Regulation der Genexpression wird als "Quorum sensing" bezeichnet. Es handelt sich hierbei um ein inter- und intrazelluläres Kommunikations- und Regulationssystem mittels Signalmolekülen, den Autoinducern. Sie erlaubt es den Zellen einer Suspension durch Autoinduktion die Zelldichte der Population zu messen und darauf zu reagieren. In Abhängigkeit von der Zelldichte steigt die Konzentration der Signalmoleküle im Umgebungsmedium an und induziert nach dem Überschreiten einer kritischen Schwellenkonzentration in den Bakterienzellen die Transkription spezifischer Genprodukte, die zur gezielten Änderung der phänotypischen Funktionen des Mikroorganismus führen.

Industrielle Prozess- oder Verfahrenswassersysteme, wie zum Beispiel offene oder geschlossene Wasserkreisläufe, Wasseraufbereitungs- und Brauchwassersysteme oder Kühlwassersysteme bieten geeignete Bedingungen für die Vermehrung von Mikroorganismen. Der Biofilm führt zu Veränderungen der physikochemischen Eigenschaften des betreffenden Materials, z. B. in Hinblick auf deren Reibungswiderstand, Diffusionsverhalten oder Wärmeleitfähigkeit. Zusätzlich können die Ausscheidungen der Biofilm-Organismen auch die Korrosion ihrer Unterlage beschleunigen, man spricht dann von Biokorrosion. Biokorrosion verursacht im Wesentlichen Veränderungen der Struktur und Stabilität eines Materials durch ästhetisch beeinträchtigende Verfärbungen, Ausscheidung direkt oder indirekt korrosiv wirkender Stoffwechselprodukte bis hin zum enzymatischen Abbau der betreffenden Materialien.

Als Folgen von Biofouling und Biokorrosion können die diverse Schäden hervorgerufen werden, wie beispielsweise erhöhter Wärmeleitungswiderstand und damit verbunden ein erhöhter Kondensatordruck, Verschlechterung der Wasserqualität des Wassers, Sicherheitsprobleme, z. B. durch Verstopfung von Ventilen, erhöhter Reinigungsaufwand, Ausfallzeiten, Belastung von Anlageteilen durch die Reinigungsprozeduren, verringerte Anlagenleistung, verkürzte Lebensdauer, schlechtere Kühlleistung bei höherem Energieverbrauch und ein erhöhter Einsatz von Bioziden und Reinigungsmitteln und damit eine erhöhte Abwasserbelastung.

Verschiedene Maßnahmen wurden entwickelt, um die Bildung von Biofilmen zu Verhindern bzw. Verlangsamen bzw. die Biofilme zu entfernen. Dazu zählen die mechanische Zerstörung der Biofilme, Maßnahmen zur Desinfektion und Entkeimung des Wassers und enzymatische Verfahren für die Entfernung von Biofilmen.

Zur Verhinderung bzw. Beseitigung von Ablagerungen werden Rohrreinigungsanlagen verwendet, z. B. Taprogge, bei dem Schwammgummikugeln vor, die zusammen mit dem Kühlwasser im Kreislauf durch die Anlage geführt werden. Diese Anlagen sind sehr teuer und werden in kleineren Kondensatoren, z. B. Industrieturbinen, und Nebenkühlkreisläufen selten verwendet. Weitere konventionelle Methoden zur Verhinderung von Biofouling sind zum Beispiel ein Rohrleitungsdesign, das zu einer Fließgeschwindigkeit von 2-3 m/s führt, ein zweigeteiltes Kondensatordesign, ein Zwei-Straßen-Rohrreinigungssystem, Kondensatorrückspülen und die thermische Behandlung.

Die Ablagerung von bakteriellen Schleimen

kann zwar mit Bioziden wirksam kontrolliert werden, jedoch bietet der Biofilm seinen Mikroorganismen einen gewissen Schutz. Dementsprechend sind sehr hohe Konzentrationen an Bioziden erforderlich, um die Bakterien abzutöten, was aus Umweltschutzgründen unerwünscht ist. Zudem lassen sich Mikroorganismen in den Biofilmen besonders schlecht ablösen. Um eine Bildung des Biofilms zu verhindern, werden derzeit Biozide, beispielsweise Natriumhypochlorit und Chlordioxid, eingesetzt.

Metalle, wie Kupfer, Aluminium und Zink und gegebenenfalls auch Silber, gelten als für Bakterien toxisch. Beispielsweise verwendet das Cuprion-Anti-Fouling-System Kupfer- und Aluminiumanoden in einem isolierten Stahlrahmen, der als Kathode dient. Hierbei werden jedoch lösliche Biozide in Form von Kupfer- bzw. Aluminiumionen ins Kühlwasser abgelassen.

DE 102 25 324 A1 verwendet einen antimikrobiellen (Acryl-) Lack mit Nanoteilchen, die kleiner als 100 nm sind, deren Oberfläche mit Silber- oder Kupferionen oder in elementarer Form angereichert ist. Eine biozide Wirkung konnte beispielsweise bei Si-beschichteten $TiO_2$-Partikeln festgestellt werden.

DE 103 37 399 A1 beschreibt ein Verfahren zur Herstellung eines silberkolloidhaltigen Stoffs und seinen Einbau in Lacke. Silberamin- und -diaminkomplexe mit Komponenten auf Basis von Epoxysilanen werden eingearbeitet. Die Silberkolloid-Partikel weisen einen Durchmesser von 5 bis 30 nm auf, wodurch eine kontrollierte Ag-Abgabe erreicht wird. Die Lacke zeigen eine biozide bzw. bakterizide Wirkung.

Die bakterizide Wirkung von Silber ist bekannt, der Mechanismus ist jedoch noch nicht vollständig aufgeklärt. Silberpartikel sind physiologisch verträglich. Silbersalze, wie Silbernitrat, zeigen auf Zeolithe aber nur einen geringen antibakteriellen Effekt. Zudem laugen Silberpartikel auch bei kontrollierter Abgabe mit der Zeit aus. Untersuchungen des kontrollierter Abgabe mit der Zeit aus. Untersuchungen des Erfinders haben gezeigt, dass die antibakterielle Wirkung von silberbasierten Systemen bereits nach zwei Wochen abnimmt.

DE 696 23 328 betrifft eine Zusammensetzung, die Mannanase zur Verhinderung und/oder Entfernung von Biofilm auf Oberflächen enthält. DE 696 19 665 offenbart ein Exopolysaccharid abbauendes Enzym, das in der Lage ist, Colansäure abzubauen. Diese enzymatischen Verfahren sind jedoch nicht vorbeugend, sondern setzen beim bestehenden Biofilm an.

Die Aufgabe der Erfindung ist eine verbesserte Beschichtung, die die Biofilm-Bildung insbesondere in Wärmeüberträgern wie Kondensatorrohren (von Industrieturbinen) und Nebenkühlkreisen deutlich reduziert oder vermeidet, und ein Verfahren zu ihrer Herstellung zu finden. Die Beschichtung soll

- den Anlagerungsmechanismus der Bakterien stören und so eine Anlagerung verhindern bzw. minimieren,
- einen Verzicht auf den Einsatz löslicher biozider Chemikalien bzw. toxische Metalle ermöglichen und somit die zum Beispiel betreffenden Kraftwerke umweltverträglicher gestalten,
- die Wärmeleitfähigkeit des beschichteten Materials verbessern bzw. nicht einschränken,
- gut auf dem beschichten Material haften und hydrolysebeständig sein,
- einen wesentlich geringeren Wartungsaufwand der Anlage im Vergleich zu mechanischen Reinigungsverfahren ermöglichen.

Diese Aufgabe wird durch eine Beschichtung gemäß Anspruch 1 und ein Verfahren mit Merkmalen gemäß Anspruch 13 gelöst. Vorteilhafte Ausführungsformen und Anwendungen der Erfindung ergeben sich aus den abhängigen Ansprüchen.

Überraschenderweise konnte die Aufgabe erfindungsgemäß dadurch gelöst werden, dass die Beschichtung die folgende Eigenschaftskombination aufweist:

- Erniedrigung der Oberflächenenergie durch Nanopartikel,
- Erhöhung der Wärme- und elektrischen Leitfähigkeit mit Nano- und/oder Mikropartikel-Composites,
- Hydrolysebeständigkeit durch Einsatz hydrolysebeständiger Polymere,
- Korrosionsschutz für Rohrleitungen.

Die hydrophobe Oberfläche der erfindungsgemäßen Beschichtung verhindert die Ausbildung eines Wasserfilms. Es ist bekannt, dass die Bildung von Ablagerungen durch Beschichten der betroffenen Oberflächen mit einem niederenergetischen Beschichtungsmaterial unterdrückt werden kann. Dabei wird mit der Oberflächenenergie die Benetzbarkeit beschrieben (vgl. Fig. 1). Der Kontaktwinkel bzw. Randwinkel $\theta$ eines Flüssigkeitstropfens hängt von der Oberflächenenergie der Flüssigkeit $\sigma_1$ und der Substratoberfläche $\sigma_s$ ab und ist ein Maß für die energetische Wechselwirkung zwischen dem Festkörper und der Flüssigkeit. Die Energie der Grenzfläche zwischen Flüssigkeit und Substratoberfläche ist $\sigma_{sl}$.

$$\cos\theta = \frac{\sigma_s - \sigma_{sl}}{\sigma_l} = \frac{\sigma_c}{\sigma_l}$$

Ein stetiger Wasserfilm an der Oberfläche würde die Anlagerung von Bakterien begünstigen. Die erfindungsgemäßen Beschichtungen schaffen superhydrophobe Oberflächen mit Oberflächenenergien von kleiner als 20 mN/m, wodurch ein stetiger Wasserfilm und damit die Anlagerung von Bakterien verringert bzw. vermieden wird. In einer Ausführungsform beträgt die Oberflächenenergie weniger als 15 mN/m. In einer weiteren Ausführungsform ist die Oberflächenenergie kleiner als 10 mN/m.

Als erfindungsgemäßes Beschichtungsmaterial eignen sich thermisch stabile metall-alkoxidische Materialien, die bevorzugt durch das Sol-Gel-Verfahren herstellbar sind. Die Sol-Gel-Hybridpolymere sind thermisch und durch UV-Strahlung härtbar. Sol-Gel-basierte Antihaft-Beschichtungen besitzen einen Netzwerk-Aufbau mit organischen und anorganischen Komponenten.

Grundsätzlich werden in der vorliegenden Erfindung Metall-Alkoxide der allgemeinen Formel (I) verwendet.

$$X_n\text{-M- }(OR)_{m\text{-}r} \qquad \text{(I)},$$

wobei

X ein verzweigter oder linearer $C_1$- bis $C_{12}$- Alkyl rest bzw. ein $C_1$- bis $C_{12}$- Arylrest ist, Geeignete Verbindungen sind Methyltrimethoxysilan, Methyltriethoxysilan, Tetraethoxyorthosilan, Propyltrimethoxysilan, Propyltriethoxysilan, Isobutyltrimethoxysilan, Isobutyltriethoxysilan, Octyltriethoxysilan, Phenyltrimethoxysilan oder Phenyltriethoxysilan.

M = Al, Si, Ti oder Zr, noch bevorzugter ist M = Si.

R ist ein verzweigter oder linearer $C_1$- bis Cs-Alkylrest bzw. Arylrest oder ein damit substituierter Silylrest sein. R umfasst bevorzugt Ethylgruppen (Tetraethyloxytitanat), Isopropylgruppen oder Trimethylsiloxidgruppen.

Werte für m, n bzw. n' ergeben sich aus der Wertigkeit des Metalls bzw. Elements M und können demgemäß ausgewählt werden. Allgemein gilt, dass m bzw. n natürliche Zahlen von ≥1 sind und weiterhin n' - m - n. Für M = Si, Ti und Zr ist m = 4 und m = 3 für M = Al. Beispielsweise ist n = 1 bis 3 für M = Si, Ti, Zr und n = 1 bis 3 für M = Al.

Weiterhin erfindungsgemäß sind Beschichtungen geeignet, die aus herkömmlichen hydrolysebeständigen Lacken bestehen. Bevorzugt wird ein Lacksystem aus der Gruppe ausgewählt, die aus Polyurethan und Silikonen bestehen.

In Silikonen sind Siliziumatome über Sauerstoffatome zu Molekülketten und/oder netzartigen Strukturen verknüpft. Die restlichen freien Valenzelektronen des Siliziums sind dabei durch Kohlenwasserstoffreste beispielsweise durch Methylgruppen wie in Formel (A) dargestellt abgesättigt.

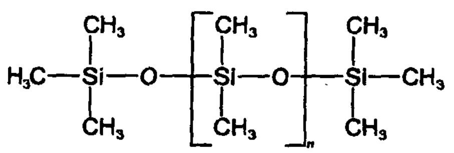

(A)

Als Silikone eignen sich vor allem vernetzte Polymethylsiloxane oder Polymethylphenylsiloxane und Fluorsilikone. Fluorsilikone sind temperatur- und oxidationsbeständige Silikone, bei denen die Methyl- durch Fluoralkylgruppen ersetzt sind. Beispielsweise werden Ein- oder Zweikomponenten-Silikonkautschuke wie Powersil 567 bzw. Elastosil RT 675 der Firma Wacker Chemie AG eingesetzt. Diese Silikone sind wärmebeständig, hydrophob, dielektrisch und gelten in der Regel als physiologisch verträglich.

Beschichtungen gemäß der vorliegenden Erfindung können mit üblichen dem Fachmann bekannten Verfahren, wie Tauchen, Fluten, Spraying oder Rakeln, aufgetragen werden. Die erfindungsgemäße Beschichtung weist bevorzugt eine Schichtdicke von größer als 10 μm auf, bevorzugt von 30 bis 150 μm, noch bevorzugter von 50 bis 100 μm, so dass die Oberflächenrauhigkeit des Rohrmaterials ausgeglichen wird. Wegen der geringen Schichtdicke der hydrophoben Beschichtung wird der Druckverlust im Rohr nicht reduziert. Die Schichtdicke wird auf jeden Fall so gewählt, dass die Rauhigkeit des Rohrmaterials ausgeglichen werden kann.

In einer Ausführungsform erhält man gleichzeitig mit einer Oberflächenfunktionalisierung durch die Zugabe von Mikro- und/oder Nanopartikel in die Beschichtung eine definierte stochastische Mikrorauhigkeit hinsichtlich des maximal auftretenden Höhenunterschieds von Erhöhung und Vertiefung in der Beschichtungsoberfläche, die die Antihafteigenschaften gegenüber Bakterien weiter verbessert. Die Beschichtung weist eine Rauhigkeit (bestimmt nach DIN 4762, ISO 4287/1) von kleiner als 200 nm, auf bevorzugt kleiner als 150 nm, und bevorzugt stochastische Topographien mit Rauhigkeiten von kleiner als 500 nm, bevorzugt kleiner als 300 nm, auf.

In den Figuren zeigt

- die Figur 1 den Kontaktwinkel bzw. Randwinkel θ eines Flüssigkeitstropfens als Maß für die energetische Wechselwirkung zwischen dem Festkörper und der Flüssigkeit,
- die Figur 2 die Oberfläche einer erfindungsgemäßen Beschichtung in einer Vergrößerung von 3 μm, die eine durch Mikropartikel hervorgerufene stochastische Topographie von 500 nm aufweist. Die Rauhigkeit Ra liegt unter 500 nm,
- die Figur 3 die Oberfläche einer erfindungsgemäßen Beschichtung in einer Vergrößerung von 3 μm, die eine durch Mikropartikel hervorgerufene stochastische Topographie von 500 nm aufweist. Die Rauhigkeit Ra liegt unter 500 nm,
- die Figur 4 die glatte Oberfläche einer erfindungsgemäßen Beschichtung in einer Vergrößerung von 3 μm, die keine Mikropartikel enthält und eine Rauhigkeit Ra von kleiner 50 nm aufweist.

Geeignete Mikro- oder Nanopartikel, die in der Beschichtung enthalten sein können, sind erfindungsgemäß aus der Gruppe ausgewählt, bestehend aus $SiO_2$ und BN. Die Partikel weisen eine Partikelgröße von 0,5 $\mu$m bis 5,5 $\mu$m, bevorzugt 0,5 $\mu$m bis 2,0 $\mu$m, auf. Werden kleinere Partikelgrößen gewählt, wird das Polymersystem bereits bei einem Gehalt von 10 Vol.-% zähflüssig.

Die Partikel sind in einer Ausführungsform $SiO_2$-Partikel, spezieller Fluor-funktionalisierte $SiO_2$-Partikel. In einer anderen Ausführungsform sind die Partikel BN-Partikel. Die Beschichtung enthält erfindungsgemäß Partikel in einer Menge von 10 bis 35 Vol.-%, bevorzugt von 25 bis 32 Vol.-%, besonders bevorzugt von 30 Vol.-%. Bei Volumengehalten bis etwa 30 % ist die Wärmeleitfähigkeit des Verbundes nahezu unabhängig von der Verstärkungsphase. Die Partikel sind dann vollständig von der Kunststoffschicht umhüllt. Bei Füllgraden bis 30 Vol.-% werden noch glatte Schichten erreicht.

Die resultierenden Kontaktwinkel (gegenüber Wasser) von handelsüblichen PUR- und Silikon-Lacken liegen im Bereich von 95 bis 100°. Mit Fluor-funktionalisierten $SiO_2$-Partikeln oder BN-Partikeln können die Kontaktwinkel auf 140° angehoben werden, wodurch die Oberflächenenergie auf Werte kleiner als 15 mN/m gesenkt werden kann.

Durch den Einbau von wärmeleitenden Partikeln mit Antihafteigenschaften, wie Bornitrid-Partikeln, in die Beschichtung können die Oberflächenenergien weiter auf Werte unter 15 mN/m gesenkt werden. Die plättchenförmigen BN-Partikel bewirken aufgrund der sehr guten Wärmeleitfähigkeit des Bornitrids eine Verbesserung des Wärmeübergangs. Zudem wird durch antistatische Silikonbeschichtungen mit leitenden Partikeln eine elektrostatische Aufladung vermieden.

In einer Ausführungsform sind BN-Partikeln in der Beschichtung enthalten. Durch den Einbau elektrisch isolierender BN-Partikel mit wie vorstehend erwähnten Abmessungen von, weist die erfindungsgemäße Beschichtung, die einen deutlich erhöhten Kontaktwinkel aufweist, eine erhöhte Wärmeleitfähigkeit auf. Die Wärmeleitfähigkeit hängt von der Größe und Morphologie der eingebauten Partikel ab. Mögliche Morphologien sind zum Beispiel sphärische, splittrige oder schichtförmige Strukturen, bevorzugt ist eine plättchenförmige Morphologie.

Das Cell-to-cell-Signaling an der Oberfläche der Bakterien durch Botenstoffe bewirkt normalerweise eine Anhaftung weiterer Bakterien. Das Cell-to-cell-Signaling degradierter Proteine dagegen bewirkt eine weitere Unterdrückung der Anhaftung von Bakterien. In einer Ausführungsform sind Botenstoffe, die das Cell-to-cell-Signaling und somit die weitere Anlagerung von Bakterien langzeitwirksam unterdrücken, in die Beschichtung eingearbeitet. Geeignete Botenstoffe umfassen beispielsweise Homoserin-Lactone (HSL); AHL und N-Acyl-Homoserin-Lacton bei gram-negativen Mikroorganismen und posttranslational modifizierte Peptide bei gram-Positive Mikroorganismen. Botenstoffe werden beispielsweise in Skiner et al., FEMS Microbiol. Rev. (2005) beschrieben und umfassen Verbindungen wie 3-Oxo-C6-HSL (vibrio fischeri), 2-Heptyl-3-Hydroxyl-4-Chinolin (Pseudomonas aeruginosa), Butyrolacton (Strptomyces griseus), zyklisches Thiolacton (Typ III) (Staphylococcus aureus), S-THMF-borat (V. harveyi) und R-THMF (S. typhimurium).

Herstellungsverfahren

Ein Verfahren zur Herstellung der erfindungsgemäßen Beschichtung umfasst die folgenden Schritte:

Bereitstellung eines Metall-alkoxid-Sols mit einem organisch modifizierten Metallalkoxid der allgemeinen Formel I als Ausgangsstoff

$$X_n\text{-M- }(OR)_{m-r}: \qquad (I),$$

wobei
X ein verzweigter oder linearer $C_1$- bis $C_{12}$- Alkylrest bzw. ein $C_1$- bis $C_{12}$- Arylrest ist,
M = Si, Ti, Zr oder Al ist
R ein verzweigter oder linearer $C_1$- bis $C_5$-Alkylrest bzw. Arylrest oder ein damit substituierter Silylrest ist;
Werte für m, n bzw. n' ergeben sich aus der Wertigkeit des Metalls bzw. Elements M und können demgemäß ausgewählt werden. Allgemein gilt, dass m bzw. n natürliche Zahlen von $\geq$1 sind und weiterhin n' = m - n. Für M = Si, Ti und Zr ist m = 4 und m = 3 für M = Al. Beispielsweise ist n = 1 bis 3 für M = Si, Ti, Zr und n = 1 bis 3 für M = Al.
oder alternativ eines Lacksystems, ausgewählt aus hydrolysebeständigen Lacken der Gruppe, bestehend aus Polyurethanen, Silikonen;
Aufbringen des Sols oder des Lacksystems auf mindestens eine zu beschichtende Oberfläche durch Tauchen, Fluten, Spraying oder Rakeln;
Härtung des Metall-alkoxid-Sols oder Lacksystems, wobei die Härtung des Silikon- und PUR-Systems bei Temperaturen zwischen 15 und 50°C erfolgt und wobei die Härtung des Metall-Alkoxid-Sols mittels Wärme oder UV-Strahlung durch Hydrolyse und Kondensation der Metall-Alkoxide erfolgt.

Die Formel I umfasst hierbei bevorzugt Methyltrimethoxysilan, Methyltriethoxysilan, Tetraethoxyorthosilan, Propyltrimethoxysilan, Propyltriethoxysilan, Isobutyltrimethoxysilan, Isobutyltriethoxysilan, Octyltriethoxysilan, Phenyltrimethoxysilan und Phenyltriethoxysilan. Bevorzugt ist weiterhin M = Si. R umfasst bevorzugt Ethylgruppen (Tetraethoxytitanat), Isopropylgruppen oder Trimethylsiloxidgruppen

Die Schichtdicke der Beschichtung beträgt erfindungsgemäß 10 bis 150 $\mu$m, bevorzugt, 50 bis 130 $\mu$m und besonders bevorzugt 50 bis 100 $\mu$m.

In einer Ausführungsform ist die mindestens eine Oberfläche eine Rohr-Innenfläche.

In einer anderen Ausführung wird Silikon, das 10 bis 30 Vol.- % Bornitrid-Partikel enthält, als Beschichtungsmäterial verwendet.

Die zu beschichtende Oberfläche kann vor dem Aufbringen des Sols oder des Lacksystems mit einem organischen Lösungsmittel gereinigt und entfettet werden. Weiterhin kann die zu beschichtende Oberfläche vor dem Aufbringen des Sols oder des Lacksystems mit einer Grundierungsschicht und/oder einem Haftvermittler beschichtet werden. Die zu beschichtende Oberfläche vor dem Aufbringen des Sols oder des Lacksystems kann ebenso mit einer molekularen Schicht mit Silanen oder Siloxanen beschichtet werden.

Wird zur Beschichtung der Oberfläche ein Spraying durchgeführt, kann dies im Plastocor-Verfahren geschehen, bei dem ein teleskopartiger Aufbau mit Spritzdüse zur Beschichtung langer Kühlrohre mit relativ kleinem Rohrdurchmesser verwendet wird.

Die erfindungsgemäße hydrophobe Beschichtung ist auf seine biozide Wirkung auf Edelstahl- und Titansubstraten getestet worden. Mit Schichtdicken von ca. 100 $\mu$m auf Titanrohrsubstrat wurden Kontaktwinkel gegenüber Wasser im Bereich von 130 -145° erreicht.

Die erfindungsgemäße Beschichtung weist eine hohe Hydrolysebeständigkeit auf. Die erzielten Oberflächenenergien bleiben selbst bei Wasserlagerung über mehrere Monate erhalten. Beispielsweise lagern sich bei BN-gefüllten Silikonbeschichtungen und Auslagerungen in Flusswasser auch nach 40 Wochen noch keine Bakterien an die beschichteten Substrate.

Bei Gehalten von ca. 30 Vol.-% BN in der Beschichtung wurden Wärmeleitfähigkeiten von größer als 3 W/mK erhalten.

Der Einsatz dieser biozider Materialien im Kühlkreislauf kann den Einsatz löslicher Biozide verhindern. Im Idealfall kann auf eine Rohrreinigungsanlage ganz verzichtet werden. Weitere Vorteile sind ein Erhalt der Anlagenleistung, längere Lebensdauer der Anlage und ein geringerer Reinigungsaufwand.

Die Erfindung wird nun anhand der beigefügten Beispiele näher erläutert, ohne diese jedoch darauf einzuschränken.

Beispiel 1

Ein Stahlrohr wird auf seiner Innenseite mit einem handelsüblichen Haftvermittler der Firma Wacker Chemie AG behandelt und anschließend mit einem Silikonlack besprüht. Dem Silikonlack wurden zuvor 30 Vol.-% submikroskaligen plättchenförmigen BN-Partikeln, BN CTP05, der Firma Saint-Gobain zugemischt. Der aufgetragene Lack wird bei ca. 30°C gehärtet.

Beispiel 2

Im Plastocor-Verfahren wird auf der Innenseite eines entfetteten Titanrohrs ein Polyurethan-Lack mit 20 Vol.-% fluor-funktionalisierten $SiO_2$-Partikeln aufgetragen. Der aufgetragene Lack wird bei ca. 20°C gehärtet.

**Patentansprüche**

1. Beschichtung mit eines Rauhigkeit von kleiner als 200 nm bestimmt nach DIN 4762/ISO 4278/1, für Kondensatorrohre, zur Reduzierung oder Vermeidung einer Biofilm-Bildung, **dadurch gekennzeichnet, dass** die Beschichtung eine Oberflächenenergie von kleiner als 20 mN/m bei einem Kontaktwinkel mit Wasser von 130° - 145° aufweist, wobei thermisch stabile metall-alkoxidische Materialien oder hydrolysebeständige Lacke als Beschichtungsmaterial verwendet werden, und wobei die Beschichtung Mikro partikel aus fluorfunktionalisierten $SiO_2$-Partikeln oder BN-Partikeln mit einer Partikelgröße von 0,5 $\mu$m bis 5,5 $\mu$m enthält und wobei die hydrolysebeständige Lacke aus der Gruppe ausgewählt sind, bestehend aus Polyurethanen und Silikonen, und wobei als Ausgangsstoff für das thermisch stabile metall-alkoxidische Material mindestens ein mindestens ein organisch modifiziertes Metallalkoxid der allgemeinen Formel I verwendet wird

$$X_n\text{-}M\text{-}(OR)_{m-n} \quad \text{(I),}$$

wobei

X ein verzweigter oder linearer $C_1$- bis $C_{12}$- Alkyl rest bzw. ein $C_1$- bis $C_{12}$- Arylrest, ist,
M ausgewählt ist aus der Gruppe bestehend aus Al, Si, Ti und Zr;
R ein verzweigter oder linearer $C_1$- bis $C_5$-Alkylrest bzw. Arylrest oder ein damit substituierter Silylrest ist; und
m = 4 für M = Si, Ti, Zr und
m = 3 für M = Al gilt.

2. Beschichtung gemäß Anspruch 1, wobei Formel (I) Methyltrimethoxysilan, Methyltriethoxysilan, Tetraethoxyorthosilan, Propyltrimethoxysilan, Propyltriethoxysilan, Isobutyltrimethoxysilan, Isobutyltriethoxysilan, Octyltriethoxysilan, Phenyltrimethoxysilan oder Phenyltriethoxysilan ist.

3. Beschichtung gemäß einem der vorstehenden Ansprüche, wobei M = Si ist.

4. Beschichtung gemäß einem der vorstehenden Ansprüche, wobei R ausgewählt ist aus der Gruppe bestehend aus Ethyl und Isopropyl.

5. Beschichtung gemäß einem der vorstehenden Ansprüche, wobei ihre Schichtdicke 10 bis 150 $\mu$m, bevorzugt, 50 bis 130 $\mu$m und besonders bevorzugt 50 bis 100 $\mu$m beträgt.

**6.** Beschichtung gemäß einem der vorstehenden Ansprüche, wobei die Partikelgröße der Mikro partikel 0,5 μm bis 2,0 μm beträgt.

**7.** Beschichtung gemäß einem der vorstehenden Ansprüche, wobei die Partikel in einer Menge von 10 bis 35 Vol.-%, bevorzugt von 25 bis 32 Vol.-%, besonders bevorzugt von 30 Vol.-% in der Beschichtung enthalten sind.

**8.** Beschichtung gemäß einem der vorstehenden Ansprüche, wobei die Beschichtung zusätzlich elektrisch leitende Partikel enthält.

**9.** Beschichtung gemäß einem der vorstehenden Ansprüche, wobei das Silikon aus der Gruppe ausgewählt ist, bestehend aus Polymethylsiloxanen, Polymethylphenylsiloxanen und Fluorsilikonen.

**10.** Beschichtung gemäß einem der vorstehenden Ansprüche, wobei die Beschichtung eine Rauhigkeit von kleiner als 150 nm aufweist.

**11.** Beschichtung gemäß einem der Ansprüche 1 bis 9, wobei die Beschichtung stochastische Topographien mit Rauhigkeiten von kleiner als 500 nm, bevorzugt kleiner als 300 nm, aufweist.

**12.** Beschichtung gemäß einem der vorstehenden Ansprüche, wobei die Beschichtung zusätzlich explizite Bbtenstoffe enthält, ausgewählt aus der Gruppe, bestehend aus Homoserin-Lactonen, AHL, N-Acyl-Homoserin-Lacton, 3-Oxo-C6-HSL, 2-Heptyl-3-Hydroxyl-4-Chinolin, Butyrolacton, zyklischem Thiolacton (Typ III), S-THMF-borat und R-THMF.

**13.** Verfahren zur Herstellung einer Beschichtung für Kondensatorrohre, zur Reduzierung oder Vermeidung einer Biofilm-Bildung, **dadurch gekennzeichnet, dass** das Verfahren die folgenden Schritte umfasst:

- Bereitstellung a) eines Metall-alkoxid-Sols mit einem organisch modifizierten Metallalkoxid der allgemeinen Formel I aus Anspruch 1
b) oder eines Lacksystems, ausgewählt aus hydrolysebeständigem Lacken der Gruppe, bestehend aus Polyurethanen und Silikonen, enthaltend Mikropartikel, entsprechend A1 mit einer Partikelgröße von 0,5 μm bis 5,5 μm;
- Aufbringen des Sols oder des Lacksystems auf mindestens eine zu beschichtende Oberfläche durch Tauchen, Fluten, Spraying oder Rakeln,
- Härtung des Metall-alkoxid-Sols oder Lacksystems, wobei die Härtung des Silikon- und PUR-Systems bei Temperaturen zwischen 15 und 50°C erfolgt; und wobei die Härtung des Metall-Alkoxid-Sols mittels Wärme oder UV-Strahlung durch Hydrolyse und Kondensation der Metall-Alkoxide erfolgt.

**14.** Verfahren gemäß Anspruch 13, wobei Formel I Methyltrimethoxysilan, Methyltriethoxysilan, Tetraethoxyorthosilan, Propyltrimethoxysilan, Propyltriethoxysilan, Isobutyltrimethoxysilan, Isobutyltriethoxysilan, Octyltriethoxysilan, Phenyltrimethoxysilan oder Phenyltriethoxysilan ist.

**15.** Verfahren gemäß einem der Ansprüche 13 bis 14, wobei M = Si ist.

**16.** Verfahren gemäß einem der Ansprüche 13 bis 15, wobei R ausgewählt ist unter der Gruppe bestehend aus Ethyl und Isopropyl.

**17.** Verfahren gemäß einem der Ansprüche 13 bis 16, wobei die mindestens eine Oberfläche eine Rohr-Innenfläche ist.

**18.** Verfahren gemäß einem der Ansprüche 13 bis 17, wobei das Silikon-System 10 bis 30 Vol.-% Bornitrid-Partikel enthält.

**19.** Verfahren gemäß einem der Ansprüche 13 bis 18, wobei die mindestens eine zu beschichtende Oberfläche vor dem Aufbringen des Sols oder des Lacksystems mit einem organischen Lösungsmittel gereinigt und entfettet wird.

**20.** Verfahren gemäß einem der Ansprüche 13 bis 19, wobei die mindestens eine zu beschichtende Oberfläche vor dem Aufbringen des Sols oder des Lacksystems mit einer Grundierungsschicht und/oder einem Haftvermittler beschichtet wird.

**21.** Verfahren gemäß einem der Ansprüche 13 bis 19, wobei die mindestens eine zu beschichtende Oberfläche vor dem Aufbringen des Sols oder des Lacksystems mit einer molekularen Schicht mit Silanen oder Siloxanen beschichtet wird.

**22.** Verfahren gemäß einem der Ansprüche 13 bis 19, wobei die Schichtdicke der Beschichtung 10 bis 150 μm, bevorzugt, 50 bis 130 μm und besonders bevorzugt 50 bis 100 μm beträgt.

## Claims

**1.** Coating for condenser pipes, with a roughness of less than 200 nm, determined according to DIN 4762/ISO 4278/1, for reducing or preventing biofilm formation, **characterised in that** the coating has a surface energy of less than 20 mN/m at a contact angle relative to water of 130°to 145°, wherein thermally stable metal alkoxide materials or hydrolysis-resistant paints are used as coating materials and wherein the coating contains microparticles of fluorine-functionalised $SiO_2$ particles or BN particles with a particle size of 0.5 µm to 5.5 µm and wherein the hydrolysis-resistant paints are selected from the group consisting of polyurethanes and silicones, and wherein at least one organically modified metal alkoxide of the general formula I is used as the starting material for the thermally stable metal alkoxide material

$$X_n\text{-M-(OR)}_{m-n} \qquad (I)$$

wherein X is a branched or straight-chain $C_1$ to $C_{12}$ alkyl group or a $C_1$ to $C_{12}$ aryl group;
M is selected from the group consisting of Al, Si, Ti and Zr;
R is a branched or straight-chain $C_1$ to $C_5$ alkyl group or aryl group or a silyl group substituted therewith, and
m = 4 for M = Si, Ti, Zr and m = 3 for M = Al.

**2.** Coating according to claim 1, wherein formula (I) is methyltrimethoxysilane, methyltriethoxysilane, tetraethoxyorthosilane, propyltrimethoxysilane, propyltriethoxysilane, isobutyltrimethoxysilane, isobutyltriethoxysilane, octyltriethoxysilane, phenyltrimethoxysilane or phenyltriethoxysilane.

**3.** Coating according to one of the preceding claims, wherein M = Si.

**4.** Coating according to one of the preceding claims, wherein R is selected from the group consisting of ethyl and isopropyl.

**5.** Coating according to one of the preceding claims, wherein the thickness of the coating is in the range of 10 µm to 150 µm, preferably 50 µm to 130 µm and particularly preferably 50 µm to 100 µm.

**6.** Coating according to one of the preceding claims, wherein the particle size of the microparticles is 0.5 µm to 2.0 µm.

**7.** Coating according to one of the preceding claims, wherein the particles are present in the coating in a quantity in the range of 10% to 35% by volume, preferably 25% to 32% by volume, particularly preferably 30% by volume.

**8.** Coating according to one of the preceding claims, wherein the coating also comprises electrically conductive particles.

**9.** Coating according to one of the preceding claims, wherein the silicone is selected from the group consisting of polymethylsiloxanes, polymethylphenylsiloxanes and fluorosilicones.

**10.** Coating according to one of the preceding claims, wherein the coating has a roughness of less than 150 nm.

**11.** Coating according to one of claims 1 to 9, wherein the coating has stochastic topographies with roughnesses of less than 500 nm, and preferably less than 300 nm.

**12.** Coating according to one of the preceding claims, wherein the coating also comprises explicit messenger substances selected from the group consisting of homoserine lactones, AHL, N-acyl-homoserine lactone, 3-oxo-C6-HSL, 2-heptyl-3-hydroxyl-4-quinoline, butyrolactone, cyclic thiolactone (type III), S-THMF-borate and R-THMF.

**13.** Method for manufacturing a coating for condenser pipes, for reducing or preventing biofilm formation, **characterised in that** the method comprises the following steps:

- preparation of

  a) a metal alkoxide sol with an organically modified metal alkoxide of the general formula I from claim 1, or
  b) a paint system selected from hydrolysis-resistant paints from the group including polyurethanes and silicones, containing microparticles, corresponding to a particle size of 0.5 µm to 5.5 µm;

- application of the sol or the paint system to at least one surface to be coated by dipping, flooding, spraying or spreading;
- curing the metal alkoxide sol or paint system, wherein the curing of the silicone and PUR system is carried out at temperatures in the range of between 15°C and 50°C; and wherein the curing of the metal alkoxide sol is carried out by means of heat or UV radiation by hydrolysis and condensation of the metal alkoxides.

**14.** Method according to claim 13, wherein formula I is methyltrimethoxysilane, methyltriethoxysilane, tetraethoxyorthosilane, propyltrimethoxysilane, propyltriethoxysilane, isobutyltrimethoxysilane, isobutyltriethoxysilane, octyltriethoxysilane, phenyltrimethoxysilane or phenyltriethoxysilane.

**15.** Method according to one of claims 13 to 14, wherein M = Si.

**16.** Method according to one of claims 13 to 15, wherein R is selected from the group consisting of ethyl and

isopropyl.

**17.** Method according to one of claims 13 to 16, wherein the at least one surface is a pipe inner surface.

**18.** Method according to one of claims 13 to 17, wherein the silicone system contains in the range of 10% to 30% by volume of boron nitride particles.

**19.** Method according to one of claims 13 to 18, wherein the at least one surface to be coated is cleaned and de-greased with an organic solvent before application of the sol or the paint system.

**20.** Method according to one of claims 13 to 19, wherein the at least one surface to be coated is coated with a foundation layer and/or an adhesion promoter before application of the sol or the paint system.

**21.** Method according to one of claims 13 to 19, wherein the at least one surface to be coated is coated with a molecular layer comprising silanes or siloxanes before application of the sol or the paint system.

**22.** Method according to one of claims 13 to 19, wherein the layer thickness of the coating is in the range of 10 μm to 150 μm, preferably 50 μm to 130 μm and particularly preferably 50 μm to 100 μm.

### Revendications

**1.** Revêtement présentant une rugosité inférieure à 200 nm, déterminée selon la norme DIN 4762/ISO 4278/1, pour des tubes de condensateur, en vue de réduire ou d'éviter une formation d'un biofilm, **caractérisé en ce que** le revêtement présente une énergie superficielle inférieure à 20 mN/m à un angle de contact avec l'eau de 130°-145°, des matériaux de type alcoxyde métallique thermiquement stables ou des laques résistant à l'hydrolyse étant utilisés comme matériau de revêtement et le revêtement contenant des microparticules en particules de $SiO_2$ fonctionnalisées par du fluor ou des particules de BN présentant une grosseur de particule de 0,5 μm à 5,5 μm et les laques résistant à l'hydrolyse étant choisies dans le groupe constitué par les polyuréthanes et les silicones et en utilisant, comme substance de départ pour le matériau de type alcoxyde métallique thermiquement stable au moins un alcoxyde métallique organiquement modifié de formule générale I

$$X_n\text{-M-(OR)}_{m-n} \qquad \text{(I)},$$

où

X représente un radical $C_1$-$C_{12}$-alkyle ramifié ou linéaire ou un radical $C_1$-$C_{12}$-aryle,
M est choisi dans le groupe constitué par Al, Si, Ti et Zr ; R représente un radical $C_1$-$C_5$-alkyle ramifié ou linéaire ou un radical aryle ou un radical silyle substitué par ceux-ci ; et
m = 4 pour M = Si, Ti, Zr et
m = 3 pour M = Al.

**2.** Revêtement selon la revendication 1, la formule (I) étant le méthyltriméthoxysilane, le méthyltriéthoxysilane, le tétraéthoxyorthosilane, le propyltriméthoxysilane, le propyltriéthoxysilane, l'isobutyltriméthoxysilane, l'isobutyltriéthoxysilane, l'octyltriéthoxysilane, le phényltriméthoxysilane ou le phényltriéthoxysilane.

**3.** Revêtement selon l'une quelconque des revendications précédentes, M étant égal à Si.

**4.** Revêtement selon l'une quelconque des revendications précédentes, R étant choisi dans le groupe constitué par éthyle et isopropyle.

**5.** Revêtement selon l'une quelconque des revendications précédentes, son épaisseur de couche étant de 10 à 150 μm, de préférence de 50 à 130 μm et de manière particulièrement préférée de 50 à 100 μm.

**6.** Revêtement selon l'une quelconque des revendications précédentes, la grosseur de particule des microparticules étant de 0,5 μm à 2,0 μm.

**7.** Revêtement selon l'une quelconque des revendications précédentes, les particules étant contenues dans le revêtement en une quantité de 10 à 35% en volume, de préférence de 25 à 32% en volume, de manière particulièrement préférée de 30% en volume.

**8.** Revêtement selon l'une quelconque des revendications précédentes, le revêtement contenant en plus des particules électriquement conductrices.

**9.** Revêtement selon l'une quelconque des revendications précédentes, le silicone étant choisi dans un groupe constitué par les polyméthylsiloxanes, les polyméthylphénylsiloxanes et les silicones fluorés.

**10.** Revêtement selon l'une quelconque des revendications précédentes, le revêtement présentant une rugosité inférieure à 150 nm.

**11.** Revêtement selon l'une quelconque des revendications 1 à 9, le revêtement présentant des topographies stochastiques présentant des rugosités inférieures à 500 nm, de préférence inférieures à 300 nm.

**12.** Revêtement selon l'une quelconque des revendications précédentes, le revêtement contenant en plus des marqueurs explicites, choisis dans le groupe constitué par les homosérine-lactones, l'AHL, la N-acyl-homosérine-lactone, la 3-oxo-C6-HSL, la 2-heptyl-3-hydroxyl-4-quinoléine, la butyrolactone, la thiolactone cyclique (type III), le borate de S-THMF et le R-THMF.

**13.** Procédé pour la préparation d'un revêtement pour des tubes de condensateur, en vue de réduire ou d'éviter une formation d'un biofilm, **caractérisé en ce que** le procédé comprend les étapes suivantes :

- mise à disposition

a) d'un sol d'alcoxyde métallique présentant un alcoxyde métallique organiquement modifié de la formule générale I de la revendication 1
b) ou d'un système de laque, choisi parmi les laques résistant à l'hydrolyse du groupe constitué par les polyuréthanes et les silicones, contenant des microparticules selon la revendication 1 présentant une grosseur de particule de 0,5 $\mu$m à 5,5 $\mu$m ;

- application du sol ou du système de laque sur au moins une surface à revêtir par imprégnation, immersion, pulvérisation ou raclage,
- durcissement du sol d'alcoxyde métallique ou du système de laque, le durcissement du système de silicone et de PUR ayant lieu à des températures entre 15 et 50°C ; et
le durcissement du sol d'alcoxyde métallique ayant lieu à l'aide de chaleur ou d'un rayonnement UV par hydrolyse et condensation des alcoxydes métalliques.

**14.** Procédé selon la revendication 13, la formule I étant le méthyltriméthoxysilane, le méthyltriéthoxysilane, le tétraéthoxyorthosilane, le propyltriméthoxysilane, le propyltriéthoxysilane, l'isobutyltriméthoxysilane, l'isobutyltriéthoxysilane, l'octyltriéthoxysilane, le phényltriméthoxysilane ou le phényltriéthoxysilane.

**15.** Procédé selon l'une quelconque des revendications 13 à 14, M étant égal à Si.

**16.** Procédé selon l'une quelconque des revendications 13 à 15, R étant choisi dans le groupe constitué par éthyle et isopropyle.

**17.** Procédé selon l'une quelconque des revendications 13 à 16, ladite au moins une surface étant une surface interne de tube.

**18.** Procédé selon l'une quelconque des revendications 13 à 17, le système de silicone contenant 10 à 30% en volume de particules de nitrure de bore.

**19.** Procédé selon l'une quelconque des revendications 13 à 18, ladite au moins une surface à revêtir étant nettoyée et dégraissée avant l'application du sol ou du système de laque à l'aide d'un solvant organique.

**20.** Procédé selon l'une quelconque des revendications 13 à 19, ladite au moins une surface à revêtir étant revêtue avant l'application du sol ou du système de laque par une couche d'apprêt et/ou un promoteur d'adhérence.

**21.** Procédé selon l'une quelconque des revendications 13 à 19, ladite au moins une surface à revêtir étant revêtue avant l'application du sol ou du système de laque par une couche moléculaire contenant des silanes ou des siloxanes.

**22.** Procédé selon l'une quelconque des revendications 13 à 19, l'épaisseur de couche du revêtement étant de 10 à 150 $\mu$m, de préférence de 50 à 130 $\mu$m et de manière particulièrement préférée de 50 à 100 $\mu$m.

FIG 1

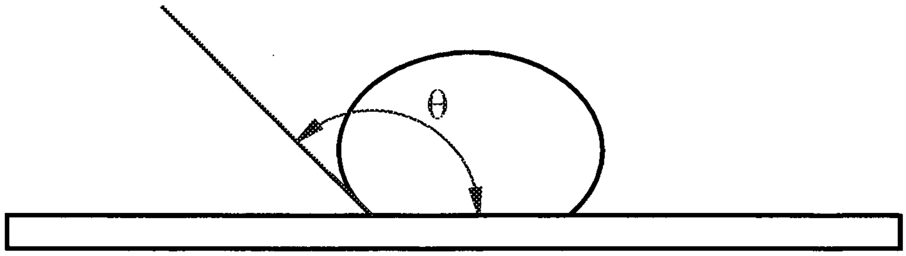


FIG 2

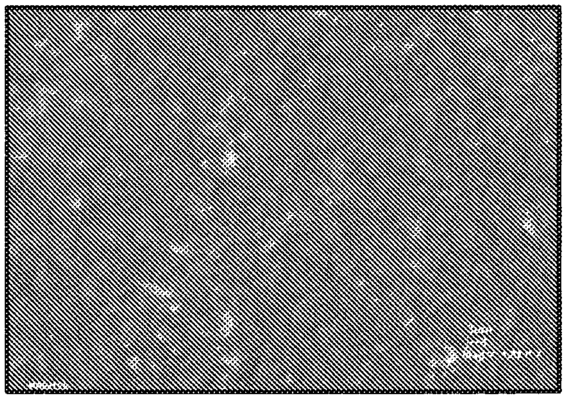

FIG 3

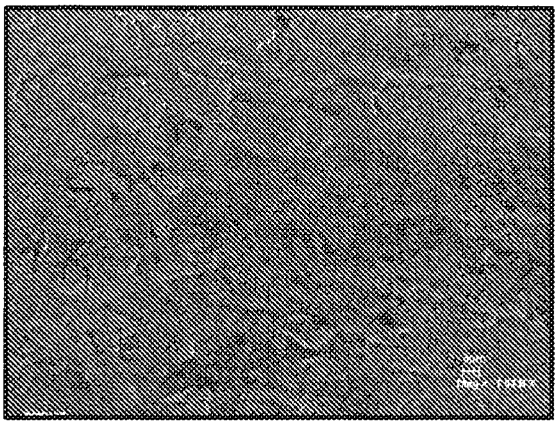

FIG 4

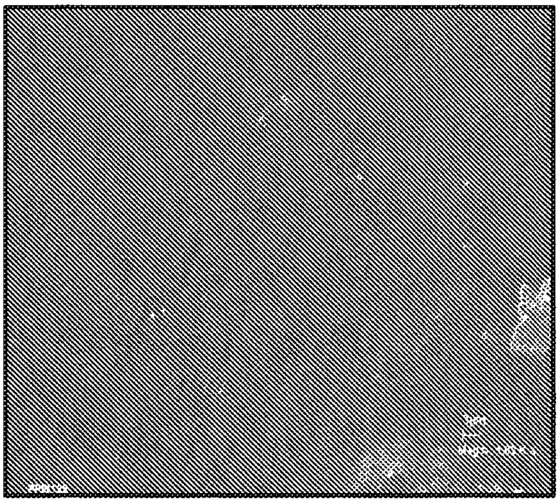

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10225324 A1
- DE 10337399 A1
- DE 69623328
- DE 69619665


### In der Beschreibung aufgeführte Nicht-Patentliteratur


- **SKINER et al.** *FEMS Microbiol. Rev.,* 2005